# EUROPÄISCHE PATENTANMELDUNG

(11) **EP 4 227 285 A1**
(43) Veröffentlichungstag der Anmeldung: **16.08.2023**
(21) Anmeldenummer: 23155946.9
(22) Anmeldetag: 10.02.2023
(51) Int. Cl.: C04B 40/00, C04B 28/08

(54) **PUZZOLANISCHER ODER LATENT-HYDRAULISCHER ZUSATZSTOFF**

(30) Priorität: 11.02.2022 AT 500942022
(71) Anmelder: Sala k.s., 84101 Bratislava (SK)
(72) Erfinder: Schinkinger, Thomas, 4072 Alkoven (AT)
(74) Vertreter: Schögl, Daniela

(57) **Zusammenfassung**

Die Erfindung betrifft einen puzzolanischen oder latent-hydraulischer Zusatzstoff umfassend Schlacke, wobei eine Stahlwerksschlacke und/oder Metallhüttenschlacke und zumindest ein inerter und/oder ein latent-hydraulischer und/oder ein puzzolanischer Stoff enthalten ist/sind, dessen Verwendung, sowie ein Verfahren zur Herstellung des puzzolanischen oder latent hydraulischer Zusatzstoffes, wobei eine Stahlwerksschlacke und/oder Metallhüttenschlacke gebrochen und getrocknet wird und gegebenenfalls zumindest ein inerter und/oder latent hydraulischer und/oder puzzolanischer Stoff, und/oder Hüttensand, und/oder zumindest ein weiterer alternativer Zusatzstoff und/oder zumindest ein Aktivator zugegeben wird/werden.

## Beschreibung

Die Erfindung betrifft einen puzzolanischen oder latent-hydraulischen Zusatzstoff umfassend Schlacke sowie dessen Verwendung und ein Verfahren zu dessen Herstellung.

Baustoffe, insbesondere Beton als künstlicher Stein, sind in der Bauindustrie nicht mehr wegzudenken und die Verwendungsmöglichkeiten, insbesondere von Beton, sind vielfältig.

Beton ist ein Baustoff, der als Dispersion unter Zugabe von Flüssigkeit aus einem Bindemittel und Zuschlagstoffen angemischt wird. Normalbeton enthält Zement als Bindemittel und Gesteinskörnung als Zuschlagstoff. Das Zugabewasser leitet den chemischen Abbindevorgang, d. h. die Hydratation und die daraufhin erfolgende Erhärtung, ein. Um die Verarbeitbarkeit und weitere Eigenschaften des Betons zu beeinflussen, können der Mischung Betonzusatzstoffe und Betonzusatzmittel beigemengt werden. Das Wasser wird zum größten Teil chemisch durch Hydratation der Bindemittelbestandteile gebunden.

Als problematisch gilt bislang der Einfluss der Betonproduktion auf die Umwelt.

Es werden weltweit erhebliche Mengen natürlicher Rohstoffe für die Herstellung von Beton verbraucht. Das globale Vorkommen der natürlichen Rohstoffe wird vor allem durch die Betonherstellung immer knapper.

Die Betonindustrie gehört zu den Hauptverursachern von Treibhausgasen, die die globale Erwärmung bewirken. Die Betonproduktion ist für etwa 6 bis 9 % aller menschengemachten CO₂-Emissionen verantwortlich, was dem Drei- bis Vierfachen der Größenordnung des gesamten Luftverkehrs entspricht. Dies hat zwei Hauptgründe: das Brennen des für die Betonherstellung benötigten Zements ist sehr energieaufwendig, der größere Teil des freigesetzten Kohlendioxids löst sich jedoch während des Brennvorganges, indem CO₂ aus dem Kalkstein gelöst wird. Weltweit werden jährlich 4,1 Milliarden Tonnen Zement hergestellt, der im Mittel etwa 60 % CaO enthält. Damit ergibt sich durch das Freisetzen des im Kalk gebundenen Kohlendioxids selbst bei optimaler Prozessführung ein Ausstoß von mindestens zwei Milliarden Tonnen CO₂ oder 6 % des weltweiten jährlichen CO₂-Ausstoßes.

Um die Emissionen bei der Zementherstellung zu begrenzen entwickelten Forscher 2020 einen Betonähnlichen Werkstoff, der bei seiner Produktion kein CO₂ freisetzt. Stattdessen wird das Treibhausgas sogar gebunden. Der Werkstoff geht von einer Mischung aus Sand und Gelatine aus, in der die Bakteriengattung Synechococcus das Treibhausgas mittels Photosynthese in Form von Calciumcarbonat mineralisiert. Der Werkstoff ist ähnlich stabil wie gewöhnlicher Mörtel mit einer Festigkeit von ~3.5 MPa, dies entspricht der Mindestfestigkeit von Portlandzementbasis. Die Forscher sehen das Material nicht als vollständigen Ersatz für Zement, sondern mögliche Einsatzzwecke beispielsweise in Strukturen mit geringer Belastung wie Pflaster, Fassaden und temporäre zivile sowie militärische Strukturen. Interessanterweise konnte mittels Einstellens von Temperatur und Feuchtigkeit die Stoffwechselaktivität der Mikroorganismen kontrolliert werden. In der Studie lebten in dem festen Material nach 30 Tagen bei 50 % relativer Luftfeuchtigkeit noch 9 bis 14 % der Mikroorganismen.

In einem weiteren alternativen Ansatz wird der Ersatz des Zements durch andere hydraulische Bindemittel, wie Hüttensand aus Hochofenschlacke, versucht. So beschreibt beispielsweise die DE 10 62 608 B ein Verfahren zur Herstellung eines Schlackenzementes aus luftgekühlter, mit kristalliner Struktur erstarrter Hochofenschlacke, wobei die Schlacke auf etwa 900°C erhitzt und durch anschließende Abschreckung in Wasser granuliert wird.

Der vorliegenden Erfindung liegt die Aufgabe zu Grunde einen puzzolanischen oder latent-hydraulischen Zusatzstoff, insbesondere für Beton, mit geringeren CO₂-Emissionen, insbesondere als jenen der Zementindustrie, zur Verfügung zu stellen.

Die Aufgabe der Erfindung wird jeweils eigenständig durch einen puzzolanischen oder latent-hydraulischen Zusatzstoff für Baustoffe umfassend Schlacke, wobei Stahlwerksschlacke und/oder Metallhüttenschlacke und gegebenenfalls zumindest ein inerter und/oder ein latent-hydraulischer und/oder ein puzzolanischer Stoff enthalten ist/sind, sowie einem Verfahren zur Herstellung eines puzzolanischen oder latent-hydraulischen Zusatzstoffes, wobei eine Stahlwerkschlacke und/oder Metallhüttenschlacke, insbesondere Konverterschlacke, gebrochen, getrocknet und anschließend gemahlen wird und gegebenenfalls zumindest ein inerter und/oder latent-hydraulischer und/oder puzzolanischer Stoff zugegeben wird/werden. Von Vorteil ist dabei, dass durch die Verwendung von Stahlwerksschlacke und/oder Metallhüttenschlacke und gegebenenfalls zumindest eines inerten und/oder latent-hydraulischen und/oder ein puzzolanischen Stoffes anstelle von primärrohstoffbasierten Portlandzementklinker im Zement der ökologische Fußabdruck von Zement und Beton durch die Verminderung von CO₂-Emissionen und die Einsparung natürlicher Roh- und Brennstoffe für die Klinkererzeugung deutlich vermindert wird.

In einer bevorzugten Ausführungsform ist als Stahlwerksschlacke eine Konverterschlacke, die bei der Erzeugung von Rohstahl nach dem Linz-Donawitz-Verfahren produziert wird und/oder Elektroofenschlacke, enthalten.

Konverterschlacke ersetzt bei der Betonherstellung zumindest teilweise Zement und somit Primärrohstoffe, wie z.B. Kalkstein und Mergel und somit können massive Eingriffe in die Landschaft vermieden werden. Konverterschlacken substituieren natürliche Rohstoffe und gelten somit als bestes Beispiel für gelebte Ressourcenschonung.

Durch die Verwendung von Konverterschlacke im puzzolanischen oder latent-hydraulischen Zusatzstoff bei der Herstellung von Beton wird die Porosität des Betons vermindert und das Betongefüge wird dichter. Von Vorteil erweist sich auch, dass die Dauerhaftigkeit und die Endfestigkeit des Betons erhöht werden. Die Frühfestigkeit des Betons wird hingegen verringert und die Hydratationswärme wird gesenkt. Auch die chemische Beständigkeit des Betons wird durch die Verwendung des erfindungsgemäßen puzzolanischen oder latent-hydraulische Zusatzstoffes verbessert.

Von Vorteil erweist sich, dass die Konverterschlacke zerkleinert, insbesondere gemahlen, ist und annähernd 80 Vol.-% eine Partikelgröße von kleiner 150 µm, vorzugsweise kleiner 70 µm, insbesondere kleiner 30 µm, aufweisen. Die Feinheit des puzzolanischen oder latent-hydraulischen Zusatzstoffes beeinflusst auch dessen Eigenschaften. Neben der Zusammensetzung entwickelt eine höhere Feinheit auch eine höhere Festigkeit.

Als inerter Stoff kann Kalkstein, und/oder als latent-hydraulischer Stoff kann Hüttensand und/oder als puzzolanischer Stoff kann Tuffstein und/oder Asche, insbesondere Verbrennungsasche enthalten sein.

Als inert werden Stoffe bezeichnet, die sich an chemischen Vorgängen nicht oder in nur sehr geringem Umfang beteiligen. Inerte Zusatzstoffe, wie Quarzmehl oder Kalksteinmehl (Calciumcarbonat), reagieren nicht mit Zement und Wasser und greifen somit nicht in die Hydratation ein. Sie dienen beispielsweise aufgrund ihrer Korngröße, Kornzusammensetzung und Kornform der Verbesserung des Kornaufbaus im Mehlkornbereich des Betons und können dadurch die Betonfestigkeit erhöhen.

Im Beton haben inerte Zusatzstoffe einen Füllereffekt, wodurch die Porosität vermindert wird und die Verarbeitbarkeit verbessert wird.

Latent hydraulische Stoffe erhärten nach Feinmahlen und Anmachen mit Wasser aufgrund ihres relativ hohen CaO-Gehalts selbstständig hydraulisch, da bei ihrer Reaktion mit Wasser ohne andere Zusätze durch Hydratation festigkeitsbildende Hydratationsprodukte entstehen. Diese Reaktion verläuft allerdings sehr langsam und muss daher für die technische Nutzung durch einen Anreger beschleunigt werden. Technisch nutzbar werden latent hydraulische Stoffe erst bei Zugabe eines Anregers, z. B. Calciumhydroxid (Ca(OH)₂) oder in ähnlicher Weise wirkende Stoffe, wodurch sie beschleunigt hydraulisch erhärten. Die Zugabe von latent-hydraulischen Stoffen im Zusatzstoff, insbesondere bei der Herstellung des Betons, erhöht die Dauerhaftigkeit und die Endfestigkeit des Betons. Die Frühfestigkeit des Betons wird hingegen verringert und die Hydratationswärme wird gesenkt.

Puzzolanische Stoffe sind Zusatzstoffe des Betons, die eine puzzolanische Reaktion auslösen. Als puzzolanische Reaktion bezeichnet man die chemische Reaktion der Zusatzstoffe in Gegenwart von Wasser und einem Stoff der Calciumhydroxid abgeben kann, welche zur Bildung von erhärtungsfähigen Calciumsilicathydraten und Calciumaluminathydraten führt. Puzzolanische Stoffe im Zusatzstoff zur Herstellung von Beton erhöhen im Beton die Dauerhaftigkeit und die Endfestigkeit. Die Frühfestigkeit des Betons wird hingegen verringert und die Hydratationswärme wird gesenkt.

Tuffstein, Hüttensand und/oder Kalkstein sind zerkleinert enthalten, wobei annähernd 80 Vol.-% eine Partikelgröße von kleiner 150 µm, vorzugsweise kleiner 70 µm, insbesondere kleiner 30 µm, aufweisen, wodurch eine sehr gute Vermengbarkeit mit der zerkleinerten Konverterschlacke erzielt werden kann.

Vorteilhaft dabei erweist sich abermals, dass durch die Verwendung von Kalkstein, Hüttensand oder Tuffstein keine weiteren Kalzinierungsprozesse unter Freisetzung von CO₂ notwendig sind bzw. durch die Verwendung von Verbrennungsaschen ein ohnehin in der Industrie anfallendes Abfallprodukt einer weiteren Verwertung zugeführt wird.

In einer möglichen Ausführungsform sind 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, des inerten und/oder latent-hydraulischen und/oder puzzolanischen Stoffes enthalten. Von Vorteil bei dieser Zusammensetzung erweist sich, dass die Betoneigenschaften im Vergleich zu herkömmlichen ZementKlinker Systemen nahezu konstant bleiben. Zudem fällt die CO₂ Bilanz dieses puzzolanischen oder latent-hydraulischen Zusatzstoffes besonders vorteilhaft aus, weil neben der CO₂ neutralen Konverterschlacke keine weiteren rohstoffbedingten CO₂ Emissionen zu erwarten sind.

Vorzugsweise sind Stahlwerkschlacke bzw. Metallhüttenschlacke und der zumindest eine inerte und/oder latent-hydraulische und/oder puzzolanischen Stoff in einem Gewichtsverhältnis von annähernd 1:1 vermengt, wodurch eine besonders gute Raumbeständigkeit erreicht werden kann.

In einer alternativen Ausführungsform sind 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, Tuffstein enthalten, wobei sowohl der ökologische Fußabdruck verringert als auch die Hydratationswärme gesenkt werden können.

Vorteilhaft erweist sich, dass Konverterschlacke und Tuffstein in einem Gewichtsverhältnis von annähernd 1:1 vermengt sind, wodurch die CO₂ Bilanz dieses puzzolanischen und/oder latent-hydraulischen Zusatzstoffes besonders vorteilhaft ausfällt, weil neben der CO₂ neutralen Konverterschlacke natürlich vorkommender Tuffstein in annähernd der gleichen Menge enthalten ist.

In einer weiteren alternativen Ausführungsform sind 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, Hüttensand enthalten, wodurch Reststoffe und Abfälle der Roheisen und Stahlherstellung verwendet werden und somit natürlich vorkommende Ressourcen geschont werden können.

Konverterschlacke und Hüttensand können in einem Massenverhältnis von annähernd 1: 1 vermengt sein, wodurch die chemischen und physikalischen Eigenschaften des puzzolanischen und/oder latent-hydraulischen Zusatzstoffes positiv beeinflusst werden, insbesondere der Glühverlust entsprechend der Norm EN 196-2 aus 2013-10-01 eingehalten wird.

In einer weiteren alternativen Ausführungsform ist im puzzolanischen oder latent-hydraulischen Zusatzstoff Konverterschlacke, zumindest ein inerter und/oder puzzolanischer Stoff und Hüttensand enthalten, wobei insbesondere 20 bis 80 Masse%, vorzugsweise 25 bis 50 Masse%, insbesondere 30 bis 40 Masse%, Konverterschlacke und 20 bis 80 Masse%, vorzugsweise 25 bis 50 Masse%, insbesondere 30 bis 40 Masse%, eines inerten und/oder puzzolanischen Stoffes und 20 bis 80 Masse%, vorzugsweise 25 bis 50 Masse%, insbesondere 30 bis 40 Masse%, Hüttensand, enthalten sind, wodurch besonders vorteilhafte Eigenschaften des mit diesem puzzolanischen oder latent-hydraulischen Zusatzstoff hergestellten Betons erreicht werden können, wie beispielsweise eine sehr gute Raumbeständigkeit entsprechend der EN 196-3 aus 2013-10-01 erreicht wird.

Bei der vorab genannten Alternative sind Konverterschlacke, der zumindest eine inerte und/oder puzzolanische Stoff und Hüttensand in einem Massenverhältnis von annähernd 1: 1: 1 vermengt um die genannten positiven und optimierten Eigenschaften des Betons zu erfüllen.

Von Vorteil erweist sich, dass die Partikelgröße der Konverterschlacke und des zumindest einen inerten und/oder latent-hydraulischen und/oder puzzolanischen Stoffes annährend gleich groß ist, wodurch die Vermengung der einzelnen Bestandteile erleichtert wird.

In einer Weiterbildung der Erfindung ist zumindest ein weiterer alternativer Zusatz- oder Füllstoff und/oder zumindest ein alkalischer Aktivator enthalten, wodurch die geforderten Parameter des puzzolanischen oder latent-hydraulischen Zusatzstoffes eingestellt und optimiert werden können.

Als möglicher zumindest ein weiterer, alternativer Zusatz- oder Füllstoff kann gebrannter Schiefer, Silikastaub, Metakaloin, Trass, Phonolith, calcinierter Ton, Ziegelmehl, Quarzmehl, Gesteinsmehl, organische Zusatzstoffe, sowie weitere inerte, latent-hydraulische, oder puzzolanische Zusatzstoffe enthalten sein, wodurch die Eigenschaften des puzzolanischen oder latent-hydraulischen Zusatzstoffes zusätzlich speziellen Anforderungen, beispielsweise erhöhten mechanischen, chemischen oder physikalischen Anforderungen, angepasst werden können.

Der zumindest eine weitere alternative Zusatzstoff kann in einer Menge von kleiner 80 Masse%, vorzugsweise kleiner 50 Masse%, insbesondere kleiner 30 Masse% im puzzolanischen oder latent-hydraulischen Zusatzstoff enthalten sein, wodurch je nach Bedarf der Aktivierung eine entsprechende Menge des weiteren alternativen Zusatzstoffes zugegeben werden kann.

Als zumindest ein alkalischer Aktivator kann festes NaOH, Na₂SiO₃, Na₂SiO₃·5H₂O, Na₂CO₃, NaAlO₂, CaSO₄, Na₂SO₄, KOH, CaO, Ca(OH)₂, MgO, Rotschlamm und/der Maisstängel- und Maiskolbenasche, sowie gegebenenfalls weitere Aktivatoren, welche in ähnlicher Weise wie die zuvor genannten Aktivatoren wirken, enthalten sein, wodurch eine weitere Aktivierung und Polymerisierung des puzzolanischen oder latent-hydraulischen Zusatzstoffes erfolgen kann.

Der zumindest eine alkalische Aktivator ist in einer Menge von kleiner 15 Masse%, vorzugsweise kleiner 10 Masse%, insbesondere kleiner 5 Masse% enthalten, wodurch einerseits eine Aktivierung und Polymerisierung des puzzolanischen oder latent-hydraulischen Zusatzstoffes erfolgen kann aber andererseits auch gleichzeitig die Kosten für dessen Herstellung gering gehalten werden.

Die Stahlwerkschlacke und/oder Metallhüttenschlacke, insbesondere Konverterschlacke, der zumindest eine inerte und/oder puzzolanische Stoff und der zumindest eine alkalische Aktivator können in einem Verhältnis von annähernd 4,5:4,5:1 im puzzolanischen oder latent-hydraulischen Zusatzstoff enthalten sein.

Vorzugsweise wird der erfindungsgemäße puzzolanische oder latent-hydraulische Zusatzstoff zur Herstellung von Baustoffen wie Beton, insbesondere von Ortbeton oder Betonfertigteilen, Mörteln und Fugenmörteln, Estrichen, Betonsteinen sowie von hydraulisch gebundenen Schüttmaterialien und/oder hydraulisch gebundenen Tragschichten verwendet. Somit kann der puzzolanische oder latent-hydraulische Zusatzstoff sehr vielseitig in der Bauindustrie verwendet werden.

Beim Verfahren zur Herstellung des puzzolanischen oder latent-hydraulischen Zusatzstoffes wird die Stahlwerkschlacke und/oder Metallhüttenschlacke, insbesondere Konverterschlacke gebrochen, getrocknet und anschließend gemahlen und gegebenenfalls zumindest ein inerter und/oder latent-hydraulischer und/oder puzzolanischer Stoff zugegeben, wodurch ein in der Stahlerzeugung entstandenes industrielles Nebenprodukt nachhaltig weiterverarbeitet und genutzt werden kann.

Vorzugsweise werden annähernd 80 Vol.-% der Konverterschlacke und/oder des zumindest einen inerten und/oder latent-hydraulischen und/oder puzzolanischen Stoffes auf eine Partikelgröße von kleiner 150 µm, vorzugsweise kleiner 70 µm, insbesondere kleiner 30 µm, gemahlen, wodurch Baustoffe unterschiedlicher Art und für unterschiedlichste Zwecke mit dem puzzolanischen oder latent-hydraulischen Zusatzstoff hergestellt werden können.

In einer möglichen Ausführungsform des Verfahrens werden die Konverterschlacke und der zumindest eine inerte und/oder puzzolanische Stoff und/oder der Hüttensand in einem Verhältnis von annähernd 1:1:1 vermengt, wodurch die physikalischen und chemischen Eigenschaften des puzzolanischen oder latent-hydraulischen Zusatzstoffes positiv beeinflusst werden.

Die Erfindung beschreibt einen puzzolanischen oder latent-hydraulischen Zusatzstoff, der in Baustoffen, insbesondere Beton, als Bindemittel wirkt.

Dabei ersetzt der puzzolanischen oder latent-hydraulischen Zusatzstoff zumindest einen erheblichen Teil des Zementes bei der Betonproduktion. Bei der Betonproduktion wird dabei zum erfindungsgemäßen puzzolanischen oder latent-hydraulischen Zusatzstoff Zement zugegeben, um das hydraulische Abbinden und die Bildung von erhärtungsfähigen Calciumsilicathydraten und Calciumaluminathydraten ablaufen zu lassen.

Der Zusatzstoff beeinflusst wesentlich die Eigenschaften des Betons. Durch die Substitution von Portlandzementklinker durch Hüttensand bei der Zementherstellung konnten von 1949 bis 2019 insgesamt 209 Mio. Tonnen des klimaschädlichen CO₂ vermieden werden. Dieses Resultat soll durch die erfindungsgemäße Zusammensetzung des puzzolanischern oder latent-hydraulischen Zusatzstoffes weiter verbessert werden und der Ausstoß des klimaschädlichen CO₂ in der Baustoffindustrie, insbesondere bei der Betonherstellung, verringert werden. Der erfindungsgemäße puzzolanische oder latent-hydraulische Zusatzstoff umfasst Stahlwerkschlacke und/oder Hüttenschlacke, vorzugsweise Konverterschlacke, und gegebenenfalls zumindest ein einen inerten und/oder ein latent-hydraulischen und/oder ein puzzolanischen Stoff.

In einer Ausführungsform des puzzolanischen oder latent-hydraulischen Zusatzstoffes für Baustoffe, insbesondere Beton, kann dieser auch ausschließlich aus Stahlwerkschlacke und/oder Metallhüttenschlacke bestehen. Bevorzugt besteht der puzzolanische oder latent-hydraulische Zusatzstoff aus Konverterschlacke.

Metallurgische Schlacken sind Sekundärprodukte bei der Gewinnung von Metallen in der Erzverhüttung, welche im Wesentlichen aus nichtmetallischen Komponenten bestehen und bei der Abkühlung auf Umgebungstemperatur gesteinsartig erstarren.

Es wird zwischen folgenden Eisenhüttenschlackenarten unterschieden (DIN 4301):
1. Hochofenschlacke: entsteht bei der Erzeugung von Roheisen durch thermo-chemische Reduktionsprozesse im Hochofen. Sie besteht aus den nichtmetallischen Komponenten des Eisenerzes, Bestandteilen von Koks bzw. Kohle sowie aus den aus metallurgischen Gründen benötigten Zuschlägen, wie Kalkstein oder Dolomit.
2. Stahlwerksschlacke: entsteht bei der Erzeugung von Rohstahl bzw. Stahl. Sie bildet sich bei der Rohstahlherstellung im circa 1600°C heißen Schmelzfluss und wird unterschieden in:
   a) Konverterschlacke oder auch LD-Schlacke bezeichnet, die bei der Umwandlung von flüssigem Roheisen und aufbereitetem Stahlschrott zu Rohstahl im LD-Konverter entsteht. Sie wird vorzugsweise aus Roheisen, Stahlschrott und weiteren Stoffen gebildet. Zuschläge sind Kalkstein oder Dolomit und sie enthält neben Calcium auch andere unter den oxidierenden Bedingungen des Prozesses oxidierte Bestandteile.
      Ein LD-Konverter ist ein Rohstahlherstellungsofen, in dem das Roheisen aus dem Hochofen mit etwa 20% Stahlschrott zu Rohstahl verarbeitet wird. Hochreiner Sauerstoff wird durch das Schmelzbad geblasen, um den Kohlenstoffgehalt zu senken (Entkohlung). Schlackenbildner werden zur Reduzierung anderer unerwünschter Elemente verwendet. Diese Stoffe verbinden sich zu Silikaten und Oxiden und bilden eine flüssige Schlacke, die auf der Oberfläche des Rohstahls schwimmt.
      Konverterschlacken setzen sich im Wesentlichen aus Calciumoxid, Siliciumdioxid und Eisenoxid zusammen. Sie bestehen in der Regel zu rund 80 Masse% aus CaO, FeO und SiO₂ und Teilen von MnO, MgO, P₂O₅, Al₂O₃ und Cr₂O₃.
      Die Konverterschlacke umfasst 15 bis 65 Masse%, vorzugsweise 25 bis 55 Masse%, insbesondere 35 bis 45 Masse% CaO, 10 bis 40 Masse%, vorzugsweise 15 bis 35 Masse%, insbesondere 20 bis 30 Masse% Fetotal, 1 bis 25 Masse%, vorzugsweise 3 bis 23 Masse%, insbesondere 7 bis 18 Masse% SiO₂ und 0 bis 20 Masse%, vorzugsweise 0,1 bis 15 Masse%, insbesondere 0,5 bis 10 Masse%, Al₂O₃.
   b) Elektroofenschlacke, die bei der Verhüttung von Stahlschrott im Elektrolichtbogenofen entsteht. Sie wird aus Zuschlägen wie Kalkstein oder Dolomit gebildet und enthält darüber hinaus Bestandteile, die unter den Bedingungen des Prozesses oxidieren.
   c) Edelstahlschlacke, die bei der Verhüttung von Stahlschrott zur Erzeugung von rostfreiem und/oder hochlegiertem Stahl in verschiedenen metallurgischen Aggregaten entsteht. Sie wird unter Zugabe unterschiedlicher Zuschläge sowie Legierungsmittel gebildet.
   d) Sekundärmetallurgische Schlacke, die bei der Nachbehandlung von Rohstahl im Rahmen der Herstellung von Qualitäts- und Massenstählen entsteht.
3. Metallhüttenschlacke umfasst Schlacken aus den Zuschlägen der Verhüttung von Kupfer-, Zink-, Blei- und Chromerz mit Eisen als Austauschmetall. Eisensilikatschlacke aus der Kupfererzeugung ist eine Metallhüttenschlacke, die bei der pyrotechnischen Kupferverhüttung im Schmelzverfahren, Schachtofenbetrieb oder Elektroofen entsteht.

Anstelle der Konverterschlacke kann auch Elektroofenschlacke, Edelstahlschlacke oder Sekundärmetallurgische Schlacke verwendet werden. Aufgrund sowohl der physikalischen und chemischen Parameter als auch ökologischen und ökonomischen Überlegungen ist die Konverterschlacke bevorzugt zu verwenden. Konverterschlacke fällt in viel größeren Mengen als Elektroofenschlacke, Edelstahlschlacke oder Sekundärmetallurgische Schlacke als Nebenprodukt bei der Stahlherstellung an. Als Stahlwerksschlacke ist vorzugsweise eine Konverterschlacke, die bei der Erzeugung von Rohstahl nach dem Linz-Donawitz-Verfahren produziert wird, im puzzolanischen oder latent-hydraulischen Zusatzstoff enthalten.

Die Stahlwerkschlacke und/oder Metallhüttenschlacke, insbesondere die Konverterschlacke, ist zerkleinert enthalten und annähernd 80 Vol.-% weisen eine Partikelgröße kleiner als 150 µm, vorzugsweise kleiner 70 µm, insbesondere kleiner 30 µm, auf. Die Zerkleinerung erfolgt vorzugsweise durch Brechen und Mahlen. Aber auch andere aus dem Stand der Technik bekannte Methoden sind zur Zerkleinerung der Konverterschlacke möglich. Für den erfindungsgemäßen puzzolanischen oder latent-hydraulischen Zusatzstoff wird vorzugsweise Konverterschlacke verwendet, wobei 80 Vol.-% eine Partikelgröße kleiner als 50 µm, vorzugsweise kleiner 30 µm, insbesondere kleiner 20 µm aufweisen, verwendet.

Als inerter Stoff kann Kalkstein, als latent-hydraulischer Stoff kann Hüttensand und als puzzolanischer Stoff kann Tuffstein und/oder Asche, insbesondere Verbrennungsasche im puzzolanischen oder latent-hydraulischen Zusatzstoff enthalten sein. Diese Stoffe gelten als Betonzusatzstoffe. Betonzusatzstoffe sind Zusätze, welche bestimmte Eigenschaften des Betons beeinflussen. Aufgrund erhöhter Zugabemengen sind diese bei der Stoffraumrechnung zu berücksichtigen. Puzzolanische oder latent-hydraulische Zusatzstoffe dürfen auf den Zementgehalt und den Wasserzementwert angerechnet werden und bilden in Gegenwart von Wasser und Stoffen, welche bei Wasserzugabe Calciumhydroxid abgeben, erhärtungsfähige Calciumsilicathydrate und Calciumaluminathydrate.

Puzzolane sind künstliche oder natürliche kieselsäurehaltige oder kieselsäure- und tonerdehaltige Stoffe. In Verbindung mit Stoffen, welche bei Wasserzugabe Calciumhydroxid abgeben, können sie festigkeitsbildend reagieren. Natürliche Puzzolane (Puzzolanerden) sind beispielsweise magmatische Gesteine, wie vulkanischer Tuff, aber auch Sedimentgesteine, wie Kalkstein, die einen hohen Anteil löslicher Kieselsäure und teilweise auch reaktionsfähiges Aluminiumoxid (Tonerde) enthalten. Künstliche Puzzolane sind beispielsweise Aschen aus Verbrennung von Steinkohle oder Braunkohle. Puzzolane haben kein eigenes Erhärtungsvermögen. Sie reagieren erst dann zu festigkeitsbildenden und wasserunlöslichen Verbindungen, wenn sie nach der Wasserzugabe mit Stoffen, welche bei Wasserzugabe Calciumhydroxid abgeben, in Berührung kommen.

Tuffe sind vulkanische Eruptivgesteine, welche durch die Verfestigung pyroklastischer Ablagerungen entstehen.

Kalkstein ist ein vorwiegend aus Calciumcarbonat (CaCO₃) bestehendes Sedimentgestein. Aschen sind die festen Rückstände aus thermischen Verbrennungsprozessen. Sie entstehen aus dem anorganischen Teil der verbrannten Substanz und bestehen somit aus Mineralphasen und Gläsern.

Tuffstein und/oder Kalkstein und/oder gegebenenfalls Hüttensand sind zerkleinert im puzzolanischen oder latent-hydraulischen Zusatzstoff enthalten, wobei annähernd 80 Vol.-% eine Partikelgröße von kleiner 150 µm, vorzugsweise kleiner 70 µm, insbesondere kleiner 30 µm, aufweisen.

Der puzzolanische oder latent-hydraulische Zusatzstoff enthält 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, des inerten und/oder latent-hydraulischen und/oder puzzolanischen Stoffes.

In einer bevorzugten Ausführungsform besteht der puzzolanische oder latent-hydraulische Zusatzstoff aus Stahlwerkschlacke und/oder Metallhüttenschlacke, insbesondere Konverterschlacke, und zumindest einem inerten und/oder latent-hydraulischen und/oder puzzolanischen Stoff, wobei die beiden Bestandteile des puzzolanischen oder latent-hydraulischen Zusatzstoffes in einem Massenverhältnis von annähernd 1:1 vermengt sind.

In einer speziellen Ausführungsvariante ist im puzzolanischen oder latent-hydraulischen Zusatzstoff 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, Tuffstein enthalten.

In einer Weiterbildung der speziellen Ausführungsvariante besteht der puzzolanische oder latent-hydraulische Zusatzstoff aus Konverterschlacke und Tuffstein, wobei die beiden Bestandteile in einem Massenverhältnis von annähernd 1:1 vermengt sind.

In einer alternativen Ausführungsform ist neben Konverterschlacke Hüttensand im puzzolanischen oder latent-hydraulischen Zusatzstoff enthalten oder der puzzolanische oder latent-hydraulische Zusatzstoff besteht aus Konverterschlacke und Hüttensand.

Beim Schmelzen von Eisenerz im Hochofen fällt Hochofenschlacke an. Die aus dem Hochofen abgezogene Schlackenschmelze wird mit Wasser abgeschreckt. Es entsteht ein überwiegend glasig erstarrter, latent-hydraulischer Stoff, Hüttensand. Fein vermahlen kann Hüttensandmehl bei entsprechender Anregung, z.B. durch Stoffe, welche bei Wasserzugabe Calciumhydroxid abgeben, erhärtungsfähige Calciumsilicathydrate und Calciumaluminathydrate bilden.

Bei der alternativen Ausführungsform sind 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, Hüttensand im puzzolanischen oder latent-hydraulischen Zusatzstoff enthalten.

In einer speziellen Ausführungsvariante der vorab genannten alternativen Ausführungsform sind Konverterschlacke und Hüttensand in einem Massenverhältnis von annähernd 1:1 vermengt.

In alternativen Ausführungsformen ist es auch möglich, dass der puzzolanische oder latent-hydraulische Zusatzstoff aus Konverterschlacke und Kalkstein oder in einer weiteren Ausführungsvariante aus Konverterschlacke und Asche besteht. Dabei kann der puzzolanische oder latent-hydraulische Zusatzstoff aus 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, Kalkstein gebildet sein. Alternativ kann der puzzolanische oder latent-hydraulische Zusatzstoff aus 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, Asche gebildet sein. Die jeweils beiden Stoffe des puzzolanischen oder latent-hydraulischen Zusatzstoffes können dabei jeweils in einem Massenverhältnis von annähernd 1:1 vorliegen.

Der puzzolanische oder latent-hydraulische Zusatzstoff umfasst in einer weiteren alternativen Ausführungsvariante Stahlwerksschlacke und/oder Metallhüttenschlacke und zumindest einen inerten und/oder puzzolanischen Stoff und/oder Hüttensand. Vorzugsweise ist als Stahlwerksschlacke eine Konverterschlacke, die bei der Erzeugung von Rohstahl nach dem Linz-Donawitz-Verfahren produziert wird, enthalten. Als inerter und/oder puzzolanischer Stoff ist bevorzugt Tuffstein, Kalkstein und/oder Asche enthalten.

Der puzzolanische oder latent-hydraulische Zusatzstoff enthält 20 bis 80 Masse%, vorzugsweise 25 bis 50 Masse%, insbesondere 30 bis 40 Masse%, Konverterschlacke und 20 bis 80 Masse%, vorzugsweise 25 bis 50 Masse%, insbesondere 30 bis 40 Masse%, eines inerten und/oder latent-hydraulischen Stoffes und 20 bis 80 Masse%, vorzugsweise 25 bis 50 Masse%, insbesondere 30 bis 40 Masse%, Hüttensand.

In einer besonderen Ausführungsform sind im puzzolanische oder latent-hydraulische Zusatzstoff Stahlwerkschlacke und/oder Metallhüttenschlacke, insbesondere Konverterschlacke, der zumindest eine inerte und/oder puzzolanische Stoff und Hüttensand in einem Massenverhältnis von annähernd 1:1:1 vermengt.

Als puzzolanischer Stoff ist im puzzolanischen oder latent-hydraulischen Zusatzstoff Tuffstein und in den oben angeführten Mengenangaben enthalten. Der puzzolanische Stoff kann auch Asche sein, oder es kann auch ein Gemisch unterschiedlicher puzzolanischer Stoffe enthalten sein. Als inerter Stoff kann Kalkstein anstelle des puzzolanischen Stoffes enthalten sein. Es ist aber auch möglich, dass neben Konverterschlacke und Hüttensand sowohl ein puzzolanischer Stoff, insbesondere Asche und/oder Tuffstein, als auch ein inerter Stoff, insbesondere Kalkstein im puzzolanischen oder latent-hydraulischen Zusatzstoff enthalten ist.

Die Partikelgröße der Konverterschlacke und des zumindest einen inerten und/oder puzzolanischen und/oder latent-hydraulischen Stoffes können annährend gleich sein. Es ist aber auch möglich, dass die Partikelgröße der Konverterschlacke und des zumindest einen inerten und/oder puzzolanischen Stoffes gleich ist und der Hüttensand eine andere Partikelgröße aufweist. Es ist aber auch möglich, dass die Partikelgröße der Konverterschlacke und des Hüttensands gleich groß ist und der inerte und/oder puzzolanische Stoff eine andere Partikelgröße aufweist, insbesondere wenn Asche, insbesondere Verbrennungsasche, als puzzolanischer Stoff enthalten ist.

Als weitere Bestandteile können in der Zusammensetzung zur Bildung des puzzolanischen oder latent-hydraulischen Zusatzstoffes auch weitere, alternative Zusatzstoffe oder Füllstoffe, wie beispielsweise gebrannter Schiefer, Silikastaub, Metakaloin, Trass, Phonolith, calcinierter Ton, Ziegelmehl, Quarzmehl, Gesteinsmehl, organische Zusatzstoffe, sowie weitere inerte, latent-hydraulische, oder puzzolanische Zusatzstoffe enthalten sein. Der zumindest eine weitere alternative Zusatzstoff kann in einer Menge von kleiner 80 Masse%, vorzugsweise kleiner 50 Masse%, insbesondere kleiner 30 Masse% enthalten sein.

In einer besonderen Ausführungsvariante können dem erfindungsgemäßen puzzolanischen oder latent-hydraulischen Zusatzstoff neben jener aus dem Stand der Technik bekannten Aktivierung über Zement oder Stoffe, welche bei Wasserzugabe Calciumhydroxid abgeben können, auch alkalische Aktivatoren zugegeben werden, welche zu einer Aktivierung und Polymerisierung des puzzolanischen oder latent-hydraulischen Zusatzstoffes bei der Anwendung führen. Bei der alkalischen Aktivierung kommt es in der Anwendung zur Bildung von zumeist amorphen Polymeren, welche zur Festigkeitsbildung beitragen. Der zumindest eine alkalische Aktivator wird dem puzzolanischen oder latent-hydraulischen Zusatzstoff vorzugsweise in einem festen Aggregatszustand zugegeben.

Aktivatoren, die dabei verwendet werden können, umfassen festes NaOH, Na₂SiO₃, Na₂SiO₃·5H₂O, Na₂CO₃, NaAlO₂, CaSO₄, Na₂SO₄, KOH, CaO, Ca(OH)₂, MgO, Rotschlamm und/oder Maisstängel- und Maiskolbenasche, sowie gegebenenfalls weitere Aktivatoren, welche in ähnlicher Weise wie die zuvor genannten Aktivatoren wirken. Der zumindest eine alkalische Aktivator kann in einer Menge von kleiner 15 Masse%, vorzugsweise kleiner 10 Masse%, insbesondere kleiner 5 Masse% enthalten sein.

Der puzzolanische oder latent-hydraulische Zusatzstoff kann auch mit Zement vermengt werden um ein Bindemittel für die Bauindustrie zu bilden. Hierbei können beispielsweise 30 bis 50 Gew.-% des Zements durch den erfindungsgemäßen puzzolanische oder latent-hydraulische Zusatzstoff ersetzt werden, um ein Bindemittel für die Herstellung von Beton zur Verfügung zu stellen. Es ist aber auch möglich den Zement vollständig durch den erfindungsgemäßen puzzolanischen oder latent-hydraulischen Zusatzstoff zu ersetzen.

Der erfindungsgemäße puzzolanische oder latent-hydraulische Zusatzstoff kann bei der Vermengung mit Zement, gemeinsam mit dem Zementklinker vermahlen werden, nach der Vermahlung im trockenen Zustand mit ebenfalls gemahlenem Zement gemischt werden, im Zuge der Betonherstellung mit dem Zement vermengt werden oder auf eine andere Art mit dem Zement in Verbindung gebracht werden.

Der puzzolanische oder latent-hydraulische Zusatzstoff wird zur Herstellung von Baustoffen, wie Beton, insbesondere von Ortbeton oder Betonfertigteilen, Mörteln und Fugenmörteln, Estrichen, Betonsteinen, sowie von, hydraulisch gebundenen Schüttmaterial und/oder hydraulisch gebundener Tragschicht verwendet. Besonders gut eignet sich der erfindungsgemäße puzzolanische oder latent-hydraulische Zusatzstoff zur Herstellung von Beton. Auch eine Verwendung des puzzolanischen oder latent-hydraulischen Zusatzstoffes als Baustoff in Form von Fußboden-, Wand-, und Dachelementen, hydraulisch gebundenen Schüttmaterialien und von hydraulisch gebundenen Tragschichten für den Straßen- und Wegebau ist möglich.

Konverterschlacke wurde bisher im Gegensatz zu Hüttensand aus Hochofenschlacke, aus technischer Perspektive als ungeeignet erachtet, da sie ohne weitere notwendige Aufbereitungsschritte nicht als puzzolanischer oder latent-hydraulischer Zusatzstoff fungieren kann. Diese notwendigen Aufbereitungsschritte liegen dem erfindungsgemäßen Verfahren zur Herstellung des puzzolanischen oder latent-hydraulischen Zusatzstoff umfassend Schlacke, zu Grunde.

Darüber hinaus ist eine Verwendung von Konverterschlacke in den facheinschlägigen europäischen Normen zum Anmeldezeitpunkt der Erfindung weder vorgesehen, noch zugelassen.

### Beispiele:

### Stahlwerkschlacke, insbesondere Konverterschlacke

In einer möglichen Ausführungsform besteht der puzzolansiche oder latent-hydraulische Zusatzstoff aus Stahlwerkschlacke, insbesondere Konverterschlacke, und gegebenenfalls Metallhüttenschlacke. Vorzugsweise sind annähernd 80 Vol.-% der Partikel kleiner als 20 µm. Im nachfolgenden sind mögliche Ausführungsbeispiele der Erfindung in tabellarischer Form dargestellt. Die Mengenangaben sind in Massenprozent (Masse%) angeführt (Tabelle 1).

| | 1 | 2 | 3 | 4 | 5 | 6 | 7 | 8 |
|---|---|---|---|---|---|---|---|---|
| Konverterschlacke | 100 | 80 | 50 | 99 | 33 | 20 | 37 | 10 |
| Metallhüttenschlacke | | 20 | 50 | | 33 | | | 10 |
| alternativer Zusatzstoff | | | | | 33 | 70 | 60 | 80 |
| Aktivator | | | | 1 | 1 | 10 | 3 | |

Als weitere alternative inerte und/oder latent-hydraulische und/oder puzzolanische Zusätze können in den beschriebenen Zusammensetzungen zur Bildung des puzzolanischen oder latent-hydraulischen Zusatzstoffes auch weitere, alternative Zusatzstoffe oder Füllstoffe, wie beispielsweise gebrannter Schiefer, Silikastaub, Metakaloin, Trass, Phonolith, calcinierter Ton, Ziegelmehl, Quarzmehl, Gesteinsmehl, organische Zusatzstoffe, sowie weitere inerte, latent-hydraulische, oder puzzolanische Zusatzstoffe enthalten sein, wobei vom zumindest einen weiteren alternativen Zusatzstoff bis zu 80 Masse% im puzzolanischen oder latent-hydraulischen Zusatzstoff enthalten sein können. Vorzugsweise sind 50 Masse%, insbesondere 30 Masse%, des zumindest einen weiteren alternativen Zusatzstoffes im puzzolanischen oder latent-hydraulischen Zusatzstoff enthalten.

Darüber hinaus können als weitere alternative Zusätze auch alkalische Aktivatoren wie NaOH, Na₂SiO₃, Na₂SiO₃·5H₂O, Na₂CO₃, NaAlO₂, CaSO₄, Na₂SO₄, KOH, CaO, Ca(OH)₂, MgO, Rotschlamm und/oder Maisstängel- und Maiskolbenasche, sowie gegebenenfalls weitere Aktivatoren, welche in ähnlicher Weise wie die zuvor genannten Aktivatoren wirken, enthalten sein, wobei der zumindest eine alkalische Aktivator in einer Menge von bis zu 15 Masse% enthalten ist. Vorzugsweise sind weniger als 10 Masse%, insbesondere weniger als 5 Masse%, des zumindest einen alkalischen Aktivators im puzzolanischen oder latent-hydraulischen Zusatzstoff enthalten.

### Stahlwerkschlacke und zumindest ein inerter und/oder puzzolanischer und/oder latent-hydraulischer Stoff

In der nachfolgenden Tabelle sind Beispiele angeführt, wobei im puzzolanischen oder latent-hydraulischen Zusatzstoff jedenfalls Konverterschlacke und zumindest ein inerter und/oder latent-hydraulischer und/oder puzzolanischer Stoff enthalten ist. Die Mengenangaben sind in Massenprozent angeführt (Tabelle 2).

| | 1 | 2 | 3 | 4 | 5 | 6 | 7 | 8 | 9 |
|---|---|---|---|---|---|---|---|---|---|
| Konverterschlacke | 50 | 50 | 50 | 50 | 34 | 34 | 40 | 80 | 60 |
| Tuffstein | 50 | | | | 33 | 33 | 20 | | 20 |
| Asche | | 50 | | | 33 | | 20 | 20 | 20 |
| Kalkstein | | | 50 | | | 33 | 20 | | |
| | | | | | | | | | |
| | 10 | 11 | 12 | 13 | 14 | 15 | 16 | 17 | |
| Konverterschlacke | 50 | 50 | 35 | 50 | 50 | 45 | 20 | 35 | |
| Tuffstein | 25 | 10 | 20 | | | 45 | 20 | | |
| Asche | 25 | 10 | 20 | | 45 | | 20 | | |
| Kalkstein | | 20 | | | | | 17 | 30 | |
| Alternativer Zusatzstoff | | 10 | 20 | 47 | | | 20 | 30 | |
| Aktivator | | | 5 | 3 | 5 | 10 | 3 | 5 | |

### Stahlwerkschlacke und Hüttensand

In einer alternativen Ausführungsform kann der puzzolanische oder latent-hydraulische Zusatzstoff 20 bis 80 Masse%, vorzugsweise 40 bis 60 Masse%, insbesondere 45 bis 55 Masse%, Konverterschlacke und 20 bis 80 Masse%, vorzugsweise 40 bis 60 Masse%, insbesondere 45 bis 55 Masse%, Hüttensand enthalten.

Die Konverterschlacke und Hüttensand können in einem Gewichtsverhältnis von annähernd 1:1 vermengt sein.

Im Nachfolgenden sind mögliche Ausführungsbeispiele des puzzolanischen oder latent-hydraulischen Zusatzstoffes umfassend jedenfalls Konverterschlacke und Hüttensand in tabellarischer Form dargestellt. Die Mengenangaben sind in Massenprozent angeführt (Tabelle 3).

| | 1 | 2 | 3 | 4 | 5 | 6 | 7 | 8 | 9 |
|---|---|---|---|---|---|---|---|---|---|
| Konverterschlacke | 50 | 80 | 60 | 70 | 50 | 34 | 70 | 40 | 45 |
| Hüttensand | 50 | 20 | 40 | 30 | 30 | 33 | 17 | 35 | 45 |
| Alternativer Zusatzstoff | | | | | 20 | 33 | 10 | 20 | |
| Aktivator | | | | | | | 3 | 5 | 10 |

In einer Weiterbildung des puzzolanischen oder latent-hydraulischen Zusatzstoffes können Konverterschlacke, zumindest ein inerter und/oder puzzolanischer Stoff und weitere alternative Zusätze wie alternative Zusatzstoffe oder Füllstoffe, wie beispielsweise gebrannter Schiefer, Silikastaub, Metakaloin, Trass, Phonolith, calcinierter Ton, Ziegelmehl, Quarzmehl, Gesteinsmehl, organische Zusatzstoffe, sowie weitere inerte, latent-hydraulische, oder puzzolanische Zusatzstoffe enthalten sein.

Es sind 20 bis 80 Masse%, vorzugsweise 25 bis 50 Masse%, insbesondere 30 bis 40 Masse%, Konverterschlacke und 20 bis 80 Masse%, vorzugsweise 25 bis 50 Masse%, insbesondere 30 bis 40 Masse%, eines inerten und/oder puzzolanischen Stoffes und 20 bis 80 Masse%, vorzugsweise 25 bis 50 Masse%, insbesondere 30 bis 40 Masse%, weitere alternative Zusätze, enthalten.

Im puzzolanischen oder latent-hydraulischen Zusatzstoff können auch Konverterschlacke, der zumindest eine inerte und/oder puzzolanische Stoff und der weitere alternative Zusatz in einem Verhältnis von annähernd 1:1:1 vermengt sein.

In einer Weiterbildung des puzzolanischen oder latent-hydraulischen Zusatzstoffes können Konverterschlacke, zumindest ein inerter und/oder puzzolanischer Stoff und ein oder mehrere alkalische Aktivatoren enthalten sein.

Es sind 20 bis 80 Masse%, vorzugsweise 25 bis 60 Masse%, insbesondere 35 bis 55 Masse%, Konverterschlacke und 20 bis 80 Masse%, vorzugsweise 25 bis 60 Masse%, insbesondere 35 bis 55 Masse%, eines inerten und/oder puzzolanischen Stoffes und 0,1 bis 20 Masse%, vorzugsweise 1 bis 15 Masse%, insbesondere 2 bis 12 Masse%, alkalische Aktivatoren, enthalten.

Im puzzolanischen oder latent-hydraulischen Zusatzstoff können auch Konverterschlacke, der zumindest eine inerte und/oder puzzolanische Stoff und alkalische Aktivatoren in einem Verhältnis von annähernd 4,5:4,5:1 vermengt sein.

### Stahlwerkschlacke, inerter und/oder puzzolanischer Stoff und Hüttensand

In einer Weiterbildung des puzzolanischen oder latent-hydraulischen Zusatzstoffes können Konverterschlacke, zumindest ein inerter und/oder puzzolanischer Stoff und Hüttensand enthalten sein.

Es sind 20 bis 80 Masse%, vorzugsweise 25 bis 50 Masse%, insbesondere 30 bis 40 Masse%, Konverterschlacke und 20 bis 80 Masse%, vorzugsweise 25 bis 50 Masse%, insbesondere 30 bis 40 Masse%, eines inertem und/oder puzzolanischen Stoffes und 20 bis 80 Masse%, vorzugsweise 25 bis 50 Masse%, insbesondere 30 bis 40 Masse%, Hüttensand, enthalten.

Im puzzolanischen oder latent-hydraulischen Zusatzstoff können auch Konverterschlacke, der zumindest eine inerte und/oder puzzolanische Stoff und Hüttensand in einem Verhältnis von annähernd 1: 1: 1 vermengt sein.

Im nachfolgenden sind mögliche Ausführungsbeispiele des puzzolanischen oder latent-hydraulischen Zusatzstoffes, wobei jedenfalls Konverterschlacke, zumindest ein inerter und/oder puzzolanischer Stoff und Hüttensand enthalten sind, in tabellarischer Form dargestellt. Die Mengenangaben sind in Massenprozent angeführt (Tabelle 4).

| | 1 | 2 | 3 | 4 | 5 | 6 | 7 | 8 | 9 | 10 | 11 |
|---|---|---|---|---|---|---|---|---|---|---|---|
| Konverterschlacke | 50 | 33 | 33 | 34 | 20 | 80 | 50 | 40 | 49 | 30 | 50 |
| Tuffstein | | 33 | | | 20 | | 20 | 10 | | 10 | 10 |
| Asche | | | | 33 | 20 | 10 | 10 | 10 | 20 | 10 | 10 |
| Kalkstein | | | 33 | | 20 | | 10 | 10 | | 5 | 10 |
| Hüttensand | 50 | 33 | 33 | 33 | 20 | 5 | 10 | 20 | 20 | 30 | 10 |
| Alternativer Zusatzstoff | | 1 | 1 | | | 5 | | 7 | 10 | 10 | 10 |
| Aktivator | | | | | | | | 3 | 1 | 5 | |

In einer Weiterbildung des puzzolanischen oder latent-hydraulischen Zusatzstoffes können Konverterschlacke, zumindest ein inerter und/oder puzzolanischer Stoff, Hüttensand und weitere alternative Zusätze wie alternative Zusatzstoffe oder Füllstoffe, wie beispielsweise gebrannter Schiefer, Silikastaub, Metakaloin, Trass, Phonolith, calcinierter Ton, Ziegelmehl, Quarzmehl, Gesteinsmehl, organische Zusatzstoffe, sowie weitere inerte, latent-hydraulische, oder puzzolanische Zusatzstoffe enthalten sein.

Es sind 20 bis 80 Masse%, vorzugsweise 25 bis 50 Masse%, insbesondere 30 bis 40 Masse%, Konverterschlacke und 20 bis 80 Masse%, vorzugsweise 25 bis 50 Masse%, insbesondere 30 bis 40 Masse%, eines inerten und/oder puzzolanischen Stoffes, 20 bis 80 Masse%, vorzugsweise 25 bis 50 Masse%, insbesondere 30 bis 40 Masse%, Hüttensand und 20 bis 80 Masse%, vorzugsweise 25 bis 50 Masse%, insbesondere 30 bis 40 Masse%, weitere alternative Zusätze, enthalten.

Im puzzolanischen oder latent-hydraulischen Zusatzstoff können auch Konverterschlacke, der zumindest eine inerte und/oder puzzolanische Stoff, Hüttensand und der weitere alternative Zusatz in einem Verhältnis von annähernd 1:1:1:1 vermengt sein.

In einer Weiterbildung des puzzolanischen oder latent-hydraulischen Zusatzstoffes können Konverterschlacke, zumindest ein inerter und/oder puzzolanischer Stoff und ein oder mehrere alkalische Aktivatoren enthalten sein.

Es sind 20 bis 80 Masse%, vorzugsweise 25 bis 60 Masse%, insbesondere 35 bis 55 Masse%, Konverterschlacke und 20 bis 80 Masse%, vorzugsweise 25 bis 60 Masse%, insbesondere 35 bis 55 Masse%, eines inerten und/oder puzzolanischen Stoffes, 20 bis 80 Masse%, vorzugsweise 25 bis 50 Masse%, insbesondere 30 bis 40 Masse%, Hüttensand und 0,1 bis 20 Masse%, vorzugsweise 1 bis 15 Masse%, insbesondere 2 bis 12 Masse%, alkalische Aktivatoren, enthalten.

Im puzzolanischen oder latent-hydraulischen Zusatzstoff können auch Konverterschlacke, der zumindest eine inerte und/oder puzzolanische Stoff, Hüttensand und zumindest ein alkalischer Aktivator in einem Verhältnis von annähernd 3:3:3:1 vermengt sein.

Wie in der Tabelle ausgeführt ist es auch möglich einen puzzolanischen oder latent-hydraulischen Zusatzstoff herzustellen, wobei 20 bis 80 Masse%, vorzugsweise 25 bis 60 Masse%, insbesondere 35 bis 55 Masse%, Konverterschlacke und 20 bis 80 Masse%, vorzugsweise 25 bis 60 Masse%, insbesondere 35 bis 55 Masse%, eines inerten und/oder puzzolanischen Stoffes, 20 bis 80 Masse%, vorzugsweise 25 bis 50 Masse%, insbesondere 30 bis 40 Masse%, Hüttensand, 20 bis 80 Masse%, vorzugsweise 25 bis 50 Masse%, insbesondere 30 bis 40 Masse%, weitere alternative Zusätze, und 0,1 bis 20 Masse%, vorzugsweise 1 bis 15 Masse%, insbesondere 2 bis 12 Masse%, alkalische Aktivatoren enthalten sind.

Selbstverständlich sind auch noch weitere Zusammensetzungen des puzzolanischen oder latent-hydraulischen Zusatzstoffes, auch wenn sie nicht in den Tabellen angeführt sind, möglich.

Die Konverterschlacke wird zerkleinert, vorzugsweise gebrochen und gemahlen, wobei annähernd 80 Vol.% annähernd < 150 µm, vorzugsweise < 70 µm, insbesondere < 30 µm sind. Auch der Tuffstein und Kalkstein weisen eine ähnliche Partikelgröße wie die Konverterschlacke auf.

In einer besonders bevorzugten Ausführungsvarianten besteht der puzzolanische oder latent-hydraulische Zusatzstoff aus 50 Masse% Konverterschlacke und 50 Masse% Tuffstein. Die Körnung der Konverterschlacke und des Tuffgesteins beträgt bei 80 Vol.-% <20 µm.

In einer weiteren bevorzugten Ausführungsvariante besteht der puzzolanische oder latent-hydraulische Zusatzstoff aus 50 Masse% Konverterschlacke und 50 Masse% Asche. Die Körnung der Konverterschlacke und der Asche beträgt bei 80 Vol.-% < 30 µm.

In einer weiteren bevorzugten Ausführungsvariante besteht der puzzolansiche und/oder latent-hydraulische Zusatzstoff aus 50 Masse% Konverterschlacke und 50 Masse% Hüttensand. Die Körnung der Konverterschlacke und des Hüttensandes beträgt bei 80 Vol.-% < 20 µm.

In einer weiteren bevorzugten Ausführungsvariante besteht der puzzolanische oder latent-hydraulische Zusatzstoff zu jeweils einem Drittel in Masse% aus Konverterschlacke, Tuffstein und Asche. Die Körnung der Konverterschlacke, der Asche und des Tuffsteins ist gleich groß und beträgt bei 80 Vol.-% < 20 µm.

In einer weiteren bevorzugten Ausführungsvariante besteht der puzzolanische oder latent-hydraulische Zusatzstoff zu jeweils einem Drittel in Masse% aus Konverterschlacke, Tuffstein und Hüttensand. Die Körnungen der Konverterschlacke, des Tuffsteins und des Hüttensand sind gleich groß, wobei 80 Vol.-% < 20 µm sind.

In einer weiteren bevorzugten Ausführungsvariante besteht der puzzolanische oder latent-hydraulische Zusatzstoff zu jeweils einem Drittel in Masse% aus Konverterschlacke, Asche und Hüttensand. Die Körnungen betragen bei 80 Vol.-% < 20 µm.

Im nachfolgenden sind die Grenzwerte für die chemischen und physikalischen Eigenschaften des erfindungsgemäßen puzzolanischen oder latent-hydraulischen Zusatzstoffes in tabellarischer Form dargestellt. In der letzten Spalte sind die Standards und Normen angeführt, mit welchen die Bestimmung der Grenzwerte erfolgt (Tabelle 5).

| **Parameter** | **Beschreibung** | **Puzzolanischer oder latent-hydraulischer Zusatzstoff** | **Standard** |
|---|---|---|---|
| Bestimmung des Glühverlustes und der Massenänderung beim Schmelzaufschluss | Der Glühverlust wird als Obergrenze in Masse% angegeben. | <17 | EN 196-2 |
| freies Calciumoxid | Freies CaO wird als Obergrenze in Masse% angeführt. | <7 | EN 450-1 / EN 451-1 / EN 196-3 |
| Reaktives Calciumoxid | Der Gehalt an reaktivem Calciumoxid wird als Obergrenze in Masse% angeführt. | <42 | EN 196-2 / EN 197-1 |
| Chloridgehalt | Der Chloridgehalt wird als Obergrenze in Masse% angeführt. | <0.1 | EN 196-2 |
| Sulfatgehalt | Der Sulfatgehalt wird als Obergrenze in Masse% angeführt. | <5 | EN 196-2 |
| Summe aus Siliziumoxid, Aluminiumoxid und Eisenoxid | Der Gehalt an Siliziumoxid, Aluminiumoxid und Eisenoxid wird als Untergrenze in Masse% angeführt. | >42 | EN 196-2 |
| Reaktives Siliziumoxid | Reaktives Siliziumoxid wird als Untergrenze in Masse% angeführt. | >5 | EN 196-2 / EN 197-1 |
| Magnesiumoxid | Der Magnesiumoxidgehalt wird als Obergrenze in Masse% angeführt. | <11 | EN 196-2 |
| Gesamtgehalt an Alkalien | Der Gehalt von Alkalien, in Form von Na₂O Äquivalenten, wird als Obergrenze in Masse% angeführt. | <6 | EN 196-2 |
| Gesamtphosphat | Der Gehalt von Gesamtphosphat wird als Obergrenze in mg/kg angeführt. | <2 | EN 450-1 |
| Partikeldichte | Die Partikeldichte wird als Obergrenze in kg/m³ angeführt. | <3000 | EN 196-6 |
| Spezifische Oberfläche | Die spezifische Oberfläche wird als Untergrenze in m²/kg angeführt. | >3000 | EN 196-6 |
| Raumbeständigkeit | Die Raumbeständigkeit wird als Obergrenze in mm angeführt. | <10 | EN 196-3 |
| Aktivitätsindex | Der Aktivitätsindex wird als Untergrenze am 28. und 90. Tag in % angeführt. | 28d >70% and 90d >85% | EN 196-1 |
| Kohlendioxid | Der Kohlendioxidgehalt wird als Obergrenze in Masse% angegeben. | <17 | EN 196-2 |
| organischer Kohlenstoff | Der Gesamtgehalt an organischem Kohlenstoff wird als Obergrenze in Masse% angeführt. | <5 | EN 13137 |

Im Verfahren zur Herstellung des erfindungsgemäßen puzzolanischen oder latent-hydraulischen Zusatzstoffes wird Stahlwerkschlacke, insbesondere Konverterschlacke, und/oder Metallhüttenschlacke und/oder zumindest ein inerter und/oder latent-hydraulischer und/oder puzzolanischer Stoff vermengt.

Um die Konverterschlacke im puzzolansichen oder latent-hydraulischen Zusatzstoff verarbeiten zu können muss sie zerkleinert werden. Dies erfolgt vorzugsweise durch Brechen. Es kann auch eine Vorkonditionierung der Konverterschlacke erfolgen, indem die Konverterschlacke gebrochen, getrocknet und anschließend auf die vorab festgelegte Korngröße gemahlen wird, vorzugsweise in einer Kugelmühle, wobei annähernd 80 Vol.-% der Partikel eine Größe von kleiner 150 µm, vorzugsweise kleiner 70 µm, insbesondere kleiner 30 µm, aufweisen. In einer besonderes bevorzugten Ausführungsvariante wird die Konverterschlacker auf eine Partikelgröße von 20 µm gemahlen.

Auch der zumindest eine inerte und/oder latent-hydraulische und/oder puzzolanische Stoff, vorzugsweise der Tuffstein, der Kalkstein und die Verbrennungsasche, wird zerkleinert, anschließend getrocknet und gemahlen, wobei annähernd 80 Vol.-% der Partikel eine Größe von kleiner 150 µm, vorzugsweise kleiner 70 µm, insbesondere kleiner 30 µm, aufweisen, um es für die Herstellung des puzzolanischen oder latent-hydraulischen Zusatzstoffes zu verwenden. Besonders bevorzugt weisen auch der zumindest eine inerte und/oder latent-hydraulische und/oder puzzolanische Stoff eine Partikelgröße von 20 µm auf.

Für die Herstellung des puzzolanischen oder latent-hydraulischen Zusatzstoffes wird die gemahlene Konverterschlacke und zumindest ein inerter und/oder latent-hydraulischer und/oder puzzolanischer Zusatzstoff in einem Massenverhältnis von annähernd 1: 1 vermengt werden. Wie vorab beschrieben können bei der Herstellung des puzzolanischen oder latent-hydraulischen Zusatzstoffes auch Hüttensand, weitere alternative Zusatzstoffe und/oder alkalische Aktivatoren beigemengt werden.

Bei der Herstellung des puzzolanischen oder latent-hydraulischen Zusatzstoffes, können alle Bestandteile zu jedem Prozessschritt miteinander in Verbindung gebracht werden. Dabei können alle Bestandteile einzeln konditioniert, zerkleinert, getrocknet und gemahlen und danach vermengt werden oder auch zu einem früheren Prozessschritt, beispielsweise nach der Trocknung oder der Zerkleinerung, miteinander vermengt werden. Bei einer möglichen Ausführungsvariante des Herstellungsverfahrens des puzzolanischen oder latent-hydraulischen Zusatzstoffes können die einzelnen Bestandteile einzeln gebrochen werden und einzeln getrocknet werden und anschließend gemeinsam gemahlen werden.

Der erfindungsgemäße puzzolanische oder latent-hydraulische Zusatzstoff kann somit den Zement bei der Herstellung des Betons ersetzen oder zumindest die Menge des Zements verringern, wodurch Klimaschäden, die durch die Zementherstellung entstehen, reduziert werden können.

Bei der Betonherstellung können die Stahlwerksschlacke und/oder Metallhüttenschlacke, insbesondere die Konverterschlacke, und gegebenenfalls zumindest ein inerter und/oder ein latent-hydraulischer und/oder ein puzzolanischer Stoff, Hüttensand, der weitere alternative Zusatzstoff und/oder der alkalische Aktivator einzeln zu den Zuschlagsstoffen zudosiert werden, wenngleich dies aufgrund der Silokapazität auch unüblich ist.

Somit können beim Verfahren zur Herstellung eines puzzolanischen oder latent-hydraulischen Zusatzstoffes zur Herstellung von Beton die einzelnen Stoffe des erfindungsgemäßen puzzolanischen oder latent-hydraulischen Zusatzstoffes und die Zuschlagsstoffe annähernd gleichzeitig einzeln zudosiert werden.

Die Ausführungsbeispiele zeigen bzw. beschreiben mögliche Ausführungsvarianten des puzzolanischen oder latent-hydraulischen Zusatzstoffes, wobei an dieser Stelle bemerkt sei, dass auch Kombinationen der einzelnen Ausführungsvarianten untereinander möglich sind.

## Patentansprüche

1. Puzzolanischer oder latent-hydraulischer Zusatzstoff für Baustoffe umfassend Schlacke, **dadurch gekennzeichnet, dass** zumindest Stahlwerksschlacke und/oder Metallhüttenschlacke und zumindest ein inerter und/oder ein latent-hydraulischer und/oder ein puzzolanischer Stoff enthalten ist/sind.

2. Puzzolanischer oder latent-hydraulischer Zusatzstoff nach Anspruch 1, **dadurch gekennzeichnet, dass** als inerter Stoff Kalkstein, als latent-hydraulischer Stoff Hüttensand und/oder als puzzolanischer Stoff Tuffstein und/oder Asche, insbesondere Verbrennungsasche, enthalten ist.

3. Puzzolanischer oder latent-hydraulischer Zusatzstoff nach einem der Ansprüche 1 oder 2, **dadurch gekennzeichnet, dass** Stahlwerkschlacke und/oder Metallhüttenschlacke und der zumindest eine inerte und/oder latent-hydraulische und/oder puzzolanische Stoff in einem Massenverhältnis von annähernd 1:1 vermengt sind.

4. Puzzolanischer oder latent-hydraulischer Zusatzstoff nach einem der Ansprüche 1 bis 3, **dadurch gekennzeichnet, dass** Konverterschlacke und Tuffstein in einem Massenverhältnis von annähernd 1:1 vermengt sind.

5. Puzzolanischer oder latent-hydraulischer Zusatzstoff nach Anspruch 1 bis 4, **dadurch gekennzeichnet, dass** Konverterschlacke, zumindest ein inerter und/oder puzzolanische Stoff und Hüttensand in einem Massenverhältnis von annähernd 1:1:1 vermengt sind.

6. Puzzolanischer oder latent-hydraulischer Zusatzstoff nach einem der Ansprüche 1 bis 5, **dadurch gekennzeichnet, dass** zumindest ein weiterer alternativer Zusatzstoff und/oder zumindest ein alkalischer Aktivator enthalten ist.

7. Puzzolanischer oder latent-hydraulischer Zusatzstoff nach Anspruch 6, **dadurch gekennzeichnet, dass** als zumindest ein weiterer, alternativer Zusatz- oder Füllstoff gebrannter Schiefer, Silikastaub, Metakaloin, Trass, Phonolith, calcinierter Ton, Ziegelmehl, Quarzmehl, Gesteinsmehl, organische Zusatzstoffe, sowie weitere inerte, latent-hydraulische, oder puzzolanische Zusatzstoffe enthalten sind.

8. Puzzolanischer oder latent-hydraulischer Zusatzstoff nach einem der Ansprüche 6 oder 7, **dadurch gekennzeichnet, dass** als zumindest ein alkalischer Aktivator festes NaOH, Na₂SiO₃, Na₂SiO₃·5H₂O, Na₂CO₃, NaAlO₂, CaSO₄, Na₂SO₄, KOH, CaO, Ca(OH)₂, MgO, Rotschlamm und/oder Maisstängel- und Maiskolbenasche, sowie gegebenenfalls weitere Aktivatoren, welche in ähnlicher Weise wie die zuvor genannten Aktivatoren wirken, enthalten sind.

9. Verwendung eines puzzolanischen oder latent-hydraulischer Zusatzstoffes nach einem der Ansprüche 1 bis 8 zur Herstellung von Baustoffen, wie Beton, insbesondere von Ortbeton oder Betonfertigteilen, Mörteln und Fugenmörteln, Estrichen, Betonsteinen, sowie von hydraulisch gebundenen Schüttmaterialien und/oder hydraulisch gebundener Tragschichten.

10. Verwendung von Konverterschlacke und/oder Elektroofenschlacke gegebenenfalls in Kombination mit zumindest als puzzolanischem Stoff Tuffstein und/oder Asche, insbesondere Verbrennungsasche, und/oder alternativen Eisenhüttenschlacken als puzzolanischer oder latent-haydraulischer Zusatzstoff für Baustoffe.

11. Verfahren zur Herstellung eines puzzolanischen oder latent-hydraulischer Zusatzstoffes nach einem der Ansprüche 1 bis 8, **dadurch gekennzeichnet, dass** Stahlwerkschlacke und/oder Metallhüttenschlacke, insbesondere Konverterschlacke, gebrochen und getrocknet und gegebenenfalls zumindest ein inerter und/oder latent-hydraulischer und/oder puzzolanischer Stoff, und/oder Hüttensand, und/oder zumindest ein weiterer alternativer Zusatzstoff und/oder zumindest ein Aktivator zugegeben wird/werden.

12. Verfahren zur Herstellung eines puzzolanischen oder latent-hydraulischer Zusatzstoffes nach Anspruch 11, **dadurch gekennzeichnet, dass** annähernd 80 Vol.-% der Konverterschlacke und/oder des zumindest einen inerten und/oder latent-hydraulischen und/oder puzzolanischen Stoffes und/oder des zumindest einen weiteren alternativen Zusatzstoffes auf eine Partikelgröße von kleiner 150 µm, vorzugsweise kleiner 70 µm, insbesondere kleiner 30 µm, gemahlen werden.

13. Verfahren nach Anspruch 11 oder 12, **dadurch gekennzeichnet, dass** die Konverterschlacke und zumindest ein inerter und/oder latent-hydraulischer und/oder puzzolanischer Stoff in einem Massenverhältnis von annähernd 1: 1 vermengt werden.

14. Verfahren nach einem der Ansprüche 11 bis 13, **dadurch gekennzeichnet, dass** die Stahlwerkschlacke und/oder Metallhüttenschlacke, insbesondere Konverterschlacke, und der zumindest eine inerte und/oder latent-hydraulische und/oder puzzolanische Stoff und/oder der zumindest eine weitere alternative Zusatzstoff vermengt und anschließend gemeinsam gemahlen werden.

15. Verfahren nach einem der Ansprüche 11 bis 13, **dadurch gekennzeichnet, dass** die Stahlwerkschlacke und/oder Metallhüttenschlacke, insbesondere Konverterschlacke, und der zumindest eine inerte und/oder latent-hydraulische und/oder puzzolanische Stoff und/oder der zumindest eine weitere alternative Zusatzstoff einzeln gebrochen werden und einzeln getrocknet werden und anschließend gemeinsam gemahlen werden.
